# EUROPEAN PATENT SPECIFICATION

(11) **EP 0 711 232 B1**
(45) Date of publication and mention of the grant of the patent: **08.12.1999**
(21) Application number: 93919885.9
(22) Date of filing: 05.08.1993
(51) Int. Cl.: B60R 21/32, B60R 22/46

(54) **Method and System for Discrimitating long-period, low-velocity Crashes**
Verfahen und System zur Erkennung von Zusammenstössen langer Dauer bei niedriger Geschwindigkeit
Procédé et système de distinction entre des accidents de longue durée et faible vitesse

(43) Date of publication of application: 15.05.1996
(73) Proprietor: AUTOMOTIVE SYSTEMS LABORATORY INC., Farmington Hills Michigan 48331 (US)
(72) Inventor: GIOUTSOS, Tony, Brighton, MI 48116 (US); PISKIE, Michael, A., Bloomfield Hills, MI 48304 (US)
(74) Representative: Price, Nigel John King
(86) International application number: US9307348
(87) International publication number: WO9504673

(56) References cited:
- EP-A- 0 536 996
- DE-A- 4 208 714
- DE-A- 4 239 585
- US-A- 3 911 391
- US-A- 4 968 965
- US-A- 4 975 850
- US-A- 4 985 835
- US-A- 4 994 972
- US-A- 5 021 678
- US-A- 5 068 793
- US-A- 5 112 080

## Description

### BACKGROUND OF THE INVENTION

The present invention generally relates to vehicle crash discrimination systems such as used to actuate a vehicle passenger restraint device (e.g. an air bag or seat belt harness), and more particularly to a method of discriminating vehicle crashes having low velocity and long time period characteristics.

A variety of systems for actuating vehicular safety devices are well known in the art. Such systems are used to sense a crash condition and, in response to such a condition, to actuate an air bag, lock a seat belt, or actuate a pretensioner for a seat belt retractor. Typically, the safety device is actuated or deployed into its protective position when an impact exceeding a predetermined magnitude is detected by the actuating system.

One prior art method for crash detection integrates the output of an electronic acceleration sensor over time and compares the result against a time-varying threshold velocity. A major drawback of this method is the wide "grey area" between "fire" and "no-fire" conditions for low-velocity crash conditions (i.e. "soft crashes") often results in an inadvertent deployment of the safety device when deployment is unnecessary, or nondeployment of the safety device when deployment is necessary. If a velocity threshold is established which will prevent a no-fire low-velocity crash pulse from causing actuation of the passenger restraint device, the velocity threshold will also prevent a low-velocity, long-time period crash pulse from causing actuation of the passenger restraint device. This presents an unacceptable and possibly hazardous crash discrimination technique.

DE-A-4239585, upon which the precharacterising portions of appended claims 1 and 5 are based, discloses a vehicle crash discrimination system in which vehicle deceleration information is processed in such a way to distinguish between low velocity impacts and higher velocity pole impacts. A vehicle velocity is calculated from deceleration information to provide an indication of vehicle energy. Simultaneously, the absolute values of the derivatives of the deceleration information are summed as an integral to provide an indication of how much the deceleration oscillates. By comparing the results of these calculations with respective threshold values, it is possible to distinguish a pole impact, which is of high energy with large oscillations in deceleration.

### Summary of the Invention

It is an object of the present invention to provide a method of crash discrimination, such as employed with controlling actuation of a vehicle passenger safety device, which is capable of discriminating low-velocity/long-time-period crashes from crash situations where safety device actuation is not desired (no-fire situations).

It is also an object of the present invention to provide a method of crash discrimination which utilizes both velocity information and a characterisation of predicted velocity for discriminating low-velocity/long-time-period crashes from no-fire crash situations.

It is further an object of the present invention to provide a method of crash discrimination which utilizes a velocity threshold value as a control measure for a predicted velocity evaluation in discriminating serious crash situations from no-fire crash situations.

In accordance with the present invention, there is provided a method of vehicle crash discrimination for controlling actuation of a vehicle passenger restraint device comprising the steps of:
receiving vehicle acceleration information from at least one acceleration sensor;
determining a value indicative of vehicle velocity based on said received vehicle acceleration information;
comparing said value indicative of vehicle velocity to a first predetermined threshold value;
determining a value indicative of changing vehicle deceleration based on said received acceleration information with respect to time;
comparing said value indicative of changing vehicle deceleration to a second predetermined threshold value, said second predetermined threshold value being a positive value; and
actuating said vehicle passenger restraint device if said value indicative of vehicle velocity exceeds said first predetermined threshold value and said value indicative of changing vehicle deceleration exceeds said second predetermined threshold value; characterised in that
the value indicative of changing vehicle deceleration is only determined if said value indicative of vehicle velocity exceeds said first predetermined threshold value and indicates whether the deceleration is increasing or decreasing after said value indicative of vehicle velocity exceeds said first predetermined threshold value, said first predetermined threshold value being equal to approximately half the velocity of a maximum allowable vehicle crash in which actuation of said vehicle passenger restraint device is not desired.

In further accordance with the present invention, there is provided a vehicle crash discrimination system for controlling actuation of a vehicle passenger restraint device comprising:
means for receiving vehicle acceleration information from an acceleration sensor;
means for determining a value indicative of vehicle velocity based on said received vehicle acceleration information;
first comparing means for comparing said value indicative of vehicle velocity to a first predetermined threshold value;
means connected to said receiving means for determining a value indicative of changing vehicle deceleration based on said received acceleration information with respect to time;
second comparing means for comparing said value indicative of changing vehicle deceleration to a second predetermined threshold value, said second predetermined threshold value being a positive value; and
means connected to said second comparing means for actuating said vehicle passenger restraint device if said value indicative of vehicle velocity exceeds said first predetermined threshold value and said value indicative of changing vehicle deceleration exceeds said second predetermined threshold value; characterised in that
the value indicative of changing vehicle deceleration is only determined if said value indicative of vehicle velocity exceeds said first predetermined threshold value and indicates whether the deceleration is increasing or decreasing after said value indicative of vehicle velocity exceeds said first predetermined threshold value, said first predetermined threshold value being equal to approximately half the velocity of a maximum allowable vehicle crash in which actuation of said vehicle passenger restraint device is not desired.

The present invention will be more fully understood upon reading the following detailed description of the preferred embodiment in conjunction with the accompanying drawings.
FIG. 1 is a graph of vehicle acceleration information versus time illustrating the prior art difficulty in discriminating low-velocity/long-time-period crash situations from no-fire crash situations;
FIG. 2 is an operational flow chart in accordance with the present invention; and
FIG. 3 is a graph illustrating an example crash discrimination in accordance with the present invention.

### DETAILED DESCRIPTION OF THE PREFERRED EMBODIMENT(S)

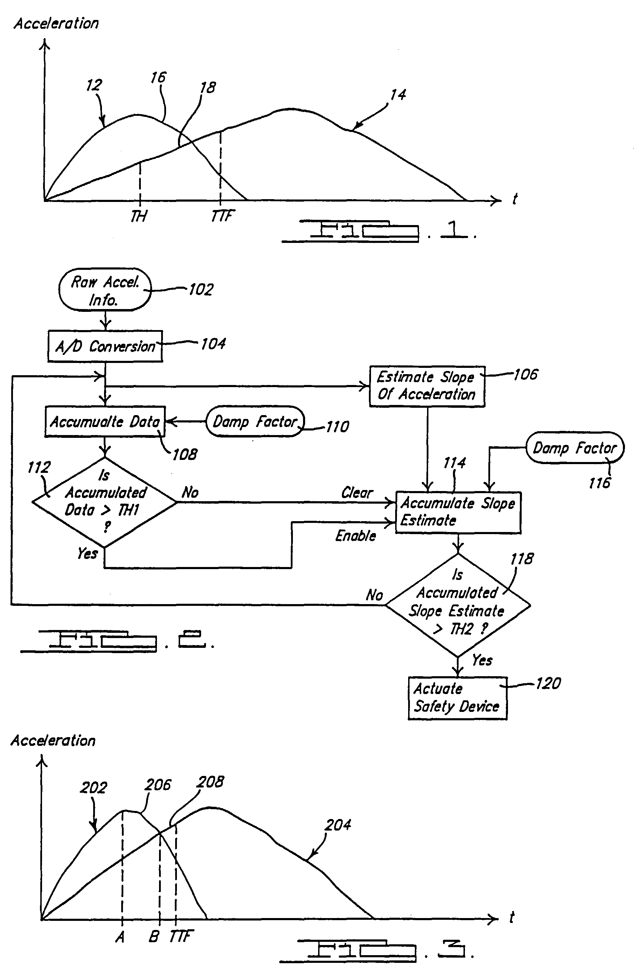

Referring to FIG. 1, there is shown a vehicle crash situation wherein the first haversine pulse 12 is representative of vehicle acceleration (deceleration) data versus time of a vehicle crash in which deployment of the safety device is not desired; and the second haversine pulse 14 is representative of vehicle deceleration data versus time of a low-velocity, slowly developing (i.e., long-time period) vehicle crash in which deployment is desired. The required time-to-fire, or "TTF", is the pre-established velocity threshold value used for safety device deployment determination. Velocity is equal to the area under the respective curve. The required TTF shown is for the second pulse 14.

As shown in FIG. 1, the area under the first haversine pulse 12 (velocity) is significantly larger than the area under the second haversine pulse 14 up to the required TTF. However, the slope of pulse 12 indicates that the crash velocity is dissipating at the required TTF. In contrast, the slope of the pulse 14 is still increasing at the required TTF indicating velocity of the crash is continuing to increase in magnitude. If velocity is the sole criterion used in a crash discrimination method which is designed for deployment with low-velocity, long-period crashes, undesired actuation of the safety device would occur with pulse 12 (because the area under pulse 12 is greater than the area under pulse 14 up to TTF) even though pulse 12 is dissipating. Establishing a velocity threshold which will not allow the first pulse 12 to actuate the safety device would also prevent the second pulse 14 from actuating the safety device until after the required TTF.

The crash discrimination system of the present invention is able to distinguish between a no-fire crash pulse 12 and a low-velocity, long-time-period crash pulse 14 requiring deployment of the vehicle passenger restraint device. Once the velocity of a particular crash pulse has exceeded a first, lower velocity threshold TH, the instantaneous slope 16 or 18 (i.e. the jerk of the velocity) of the particular crash pulse 12 or 14, respectively, is monitored for detection of increasing velocity prior to the required TTF. The calculation of the slope (jerk) value provides a reliable characterization of predicted velocity. If the slope exceeds a predetermined positive threshold value, the vehicle passenger restraint/safety device is actuated.

Referring now to FIG. 2, there is shown an operational flow chart in accordance with the present invention. Raw acceleration information generated by one or more conventional acceleration sensors (accelerometers) is received and input into an analog to digital (A/D) conversion process 104 for digitizing the raw acceleration information. A filtering process (not shown) can be utilized prior to A/D conversion. The digitized acceleration data is then processed to calculate the velocity and to estimate the slope of acceleration data versus time (jerk value) 106.

The calculation of velocity entails accumulating the digitized acceleration data at step 108 into sample points (representative of discrete points along the haversine pulse) such as by a suitable integrator circuit. In the preferred embodiment, a first damping factor 110 is summed with the digitized acceleration data prior to accumulation 108 of the data. Such damping is taught in W0-A-93/07030. The damping factor 110 may be a constant, e.g., equal to a nominal acceleration an average vehicle passenger could himself resist without the aid of a passenger safety restraint. However, the damping factor 110 is most preferably a function of the data being damped (i.e. the acceleration, velocity, or jerk). This allows significant acceleration data to be stored for a longer period of time, thereby increasing discriminator responsiveness.

After the damped, digitized acceleration data has been accumulated i.e. the velocity calculated, the accumulated data is compared at step 112 to a predetermined velocity threshold value TH1. Comparison step 112 acts as a control for a slope estimate accumulation process 114. If the accumulated data exceeds the first velocity threshold TH1, slope estimate accumulation 114 is enabled. If the velocity threshold TH1 is not exceeded, slope estimate accumulation 114 is reset and/or the accumulation results are cleared.

Once enabled, the slope estimate accumulation 114 sums together the separate acceleration data slope estimates generated by slope estimation process 106. A second damping factor 116, which is established in a manner similar to the first damping factor 110 described hereinabove, is also summed with the acceleration data slope estimates to generate an overall jerk value for the acceleration data. The accumulated jerk value is then compared at step 118 with a second jerk (slope) threshold value TH2. If the accumulated jerk value exceeds the slope threshold value TH2, the passenger restraint device is actuated as indicated at step 120. If the accumulated jerk value does not exceed the slope threshold value TH2, the discrimination process returns to generate the next accumulated sample point for comparison to the first threshold TH1.

In accordance with the present invention, the above described crash discrimination method is particularly suited for discrimination of low-velocity, long-period crashes in which vehicle safety device actuation is desired from low-velocity crashes in which deployment is not desired. This discrimination of low-velocity crashes is particularly achieved with the present invention by establishing a velocity threshold TH1 which is approximately equal to half the velocity of a maximum-allowable low-velocity crash without actuating the vehicle safety device. The exceeding of the velocity threshold TH1 is then utilized to control the monitoring of the slope (jerk) of the vehicle acceleration.

An example illustrating discrimination of a low-velocity, long-period crash in accordance with the present invention is shown in FIG. 3. Fig. 3 shows a first crash pulse 202 representative of a low-velocity crash pulse having a velocity of 8 mph (≈ 12,87 km/h) and a duration of 100 milliseconds in response to which actuation is not desired; and a second crash pulse 204 representative of a low-velocity, long-period crash pulse having a velocity of 16 mph and a duration of 200 milliseconds in response to which actuation is desired. A velocity threshold value TH1 is established at 4 mph (≈ 6,43 km/h) to correspond with approximately half the velocity of the first crash pulse 202.

At point A, the velocity of first crash pulse 202 will have exceeded the velocity threshold value TH1, thereby triggering the monitoring of the slope portion 206 of first crash pulse 202. The slope threshold value TH2 would preferably be set to a small, positive value. Since first crash pulse 202 is diminishing in velocity after point A, the accumulative slope 206 will be a negative value. Actuation of the vehicle passenger restraint device will not occur if slope threshold value TH2 is not exceeded during the monitoring period.

At point B, the velocity of second crash pulse 204 will also have exceeded the velocity threshold value of TH1 of 4 mph. However, pulse 204 is still increasing in velocity after point B. Thus, the slope 208 of second crash pulse 204 will exceed the slope threshold value TH2, thereby causing actuation of the passenger restraint device at the "time-to-fire" point TTF.

The method of the present invention is particularly applicable as a second level of vehicle crash discrimination utilized in a main vehicle crash discrimination system such as taught in the above mentioned W0-A-93/07030. In accordance thereupon, the A/D conversion 104 and the slope estimation 106 steps can be performed within the main vehicle crash discrimination system. To alleviate redundancy, the results of these steps would then be supplied to the present invention for utilization therein. A second level of crash discrimination in accordance with the present invention assures actuation of the vehicle safety device for critical low-velocity, long-period crash situations.

However, it is noted the method of present invention is equally applicable as a stand alone method of crash discrimination. For example, in analyzing FIG. 3, a crash pulse having a velocity of 25 mph (≈ 40,23 km/h) and a duration 100 milliseconds will cause actuation of the passenger restraint device, while a crash pulse having a velocity of 8 mph (≈ 12,87 km/h) and a duration of 200 milliseconds will not cause actuation of the passenger restraint device.

It will be understood that the foregoing description of the preferred embodiment of the present invention is for illustrative purposes only, and that the various structural and operational features herein disclosed are susceptible to a number of modifications and changes, none of which departs from the scope of the present invention as defined in the appended claims.

## Claims

1. A method of vehicle crash discrimination for controlling actuation of a vehicle passenger restraint device comprising the steps of:
receiving (102) vehicle acceleration information from at least one acceleration sensor;
determining (108) a value indicative of vehicle velocity based on said received vehicle acceleration information;
comparing (112) said value indicative of vehicle velocity to a first predetermined threshold value (TH1);
determining (114) a value indicative of changing vehicle deceleration based on said received acceleration information with respect to time;
comparing (118) said value indicative of changing vehicle deceleration to a second predetermined threshold value, said second predetermined threshold value being a positive value; and
actuating (120) said vehicle passenger restraint device if said value indicative of vehicle velocity exceeds said first predetermined threshold value and said value indicative of changing vehicle deceleration exceeds said second predetermined threshold value; characterised in that
the value indicative of changing vehicle deceleration is only determined if said value indicative of vehicle velocity exceeds said first predetermined threshold value and indicates whether the deceleration is increasing or decreasing after said value indicative of vehicle velocity exceeds said first predetermined threshold value, said first predetermined threshold value being equal to approximately half the velocity of a maximum allowable vehicle crash in which actuation of said vehicle passenger restraint device is not desired.

2. The method of claim 1 wherein said acceleration information is respectively damped (110,116) before determining said value indicative of vehicle velocity and said value indicative of increasing or decreasing vehicle deceleration.

3. The method of claim 1 wherein said value indicative of increasing or decreasing deceleration comprises a jerk value of the acceleration information.

4. The method of claim 1, 2 or 3 for discriminating low-velocity, long-period vehicle crashes in which actuation of a vehicle passenger restraint device is desired from low-velocity vehicle crashes in which actuation of said vehicle passenger restraint device is not desired.

5. A vehicle crash discrimination system for controlling actuation of a vehicle passenger restraint device comprising:
means (102) for receiving vehicle acceleration information from an acceleration sensor;
means (108) for determining a value indicative of vehicle velocity based on said received vehicle acceleration information;
first comparing means (112) for comparing said value indicative of vehicle velocity to a first predetermined threshold value;
means (114) connected to said receiving means for determining a value indicative of changing vehicle deceleration based on said received acceleration information with respect to time;
second comparing means (118) for comparing said value indicative of changing vehicle deceleration to a second predetermined threshold value, said second predetermined threshold value being a positive value; and
means (120) connected to said second comparing means for actuating said vehicle passenger restraint device if said value indicative of vehicle velocity exceeds said first predetermined threshold value and said value indicative of changing vehicle deceleration exceeds said second predetermined threshold value; characterised in that
the value indicative of changing vehicle deceleration is only determined if said value indicative of vehicle velocity exceeds said first predetermined threshold value and indicates whether the deceleration is increasing or decreasing after said value indicative of vehicle velocity exceeds said first predetermined threshold value, said first predetermined threshold value being equal to approximately half the velocity of a maximum allowable vehicle crash in which actuation of said vehicle passenger restraint device is not desired.

6. The system of claim 5 further comprising a first damping means (110) connected to said vehicle velocity determining means for damping said received acceleration information, and a second damping means (116) connected to said increasing or decreasing deceleration determining means for damping said value indicative of increasing or decreasing vehicle deceleration.

7. The system of claim 5 wherein said value indicative of increasing or decreasing deceleration comprises a jerk value of the acceleration information.

## Patentansprüche

1. Verfahren zur Erkennung eines Fahrzeugaufpralls zum steuern der Betätigung einer Fahrzeuginsassenrückhalteeinrichtung, mit den Schritten:
Empfangen (102) einer Fahrzeugbeschleunigungsinformation von zumindest einem Beschleunigungssensor,
Ermitteln (108) eines eine Fahrzeuggeschwindigkeit angebenden Wertes basierend auf der empfangenen Fahrzeugbeschleunigungsinformation,
Vergleichen (112) des die Fahrzeuggeschwindigkeit angebenden Wertes mit einem ersten vorbestimmten Schwellenwert (TH1),
Ermitteln (114) eines eine sich ändernde Fahrzeugverzögerung angebenden Wertes basierend auf der empfangenen Beschleunigungsinformation in Bezug auf die Zeit,
vergleichen (118) des die sich ändernde Fahrzeugverzögerung angebenden Wertes mit einem zweiten vorbestimmten Schwellenwert, wobei der zweite vorbestimmte Schwellenwert ein positiver Wert ist, und
Betätigen (120) der Fahrzeuginsassenrückhalteeinrichtung, wenn der die Fahrzeuggeschwindigkeit angebende Wert den ersten vorbestimmten Schwellenwert übersteigt und der die sich ändernde Fahrzeugverzögerung angebende Wert den zweiten vorbestimmten Schwellenwert übersteigt,
dadurch gekennzeichnet, daß
der die sich ändernde Fahrzeugverzögerung angebende Wert nur dann ermittelt wird, wenn der die Fahrzeuggeschwindigkeit angebende Wert den ersten vorbestimmten Schwellenwert übersteigt, und angibt, ob die Verzögerung zunimmt oder abnimmt, nachdem der die Fahrzeuggeschwindigkeit angebende Wert den ersten vorbestimmten Schwellenwert übersteigt, wobei der erste vorbestimmte Schwellenwert gleich ungefähr der halben Geschwindigkeit eines maximal zulässigen Fahrzeugaufpralls ist, bei dem eine Betätigung der Fahrzeuginsassenrückhalteeinrichtung nicht gewünscht ist.

2. Verfahren nach Anspruch 1, bei dem die Beschleunigungsinformation vor dem Ermitteln des die Fahrzeuggeschwindigkeit angebenden Wertes und des eine zunehmende oder abnehmende Fahrzeugverzögerung angebenden Wertes entsprechend gedämpft (110, 116) wird.

3. Verfahren nach Anspruch 1, bei dem der die zunehmende oder abnehmende Verzögerung angebende Wert einen Stoßwert der Beschleunigungsinformation umfaßt.

4. Verfahren nach Anspruch 1, 2 oder 3 zum Erkennen von Fahrzeugaufprallen langer Dauer bei niedriger Geschwindigkeit, bei denen die Betätigung einer Fahrzeuginsassenrückhalteeinrichtung gewünscht ist, aus Fahrzeugaufprallen bei niedriger Geschwindigkeit, bei denen die Betätigung der Fahrzeuginsassenrückhalteeinrichtung unerwünscht ist.

5. Fahrzeugaufprallerkennungssystem zum Steuern einer Betätigung einer Fahrzeuginsassenrückhalteeinrichtung, mit:
einer Einrichtung (102) zum Empfangen einer Fahrzeugbeschleunigungsinformation von einem Beschleunigungssensor,
einer Einrichtung (108) zum Ermitteln eines eine Fahrzeuggeschwindikeit angebenden Wertes basierend auf der empfangenen Fahrzeugbeschleunigungsinformation,
einer ersten Vergleichseinrichtung (112) zum vergleichen des die Fahrzeuggeschwindigkeit angebenden Wertes mit einem ersten vorbestimmten Schwellenwert,
einer Einrichtung (114), die mit der Empfangseinrichtung verbunden ist, zum Ermitteln eines eine sich ändernde Fahrzeugverzögerung angebenden Wertes basierend auf der empfangenen Beschleunigungsinformation in Bezug auf die Zeit,
einer zweiten vergleichseinrichtung (118) zum vergleichen des die sich ändernde Fahrzeugverzögerung angebenden Wertes mit einem zweiten vorbestimmten Schwellenwert, wobei der zweite vorbestimmte Schwellenwert ein positiver Wert ist, und
einer Einrichtung (120), die mit der zweiten Vergleichseinrichtung verbunden ist, zum Betätigen der Fahrzeuginsassenrückhalteeinrichtung dann, wenn der die Fahrzeuggeschwindigkeit angebende Wert den ersten vorbestimmten Schwellenwert übersteigt und der die sich ändernde Fahrzeugverzögerung angebende Wert den zweiten vorbestimmten Schwellenwert übersteigt, dadurch gekennzeichnet, daß
der die sich ändernde Fahrzeugverzögerung angebende Wert nur dann ermittelt wird, wenn der die Fahrzeuggeschwindigkeit angebende Wert den ersten vorbestimmten Schwellenwert übersteigt, und angibt, ob die Verzögerung zunimmt oder abnimmt, nachdem der die Fahrzeuggeschwindigkeit angebende Wert den ersten vorbestimmten Schwellenwert übersteigt, wobei der erste vorbestimmte Schwellenwert gleich ungefähr der halben Geschwindigkeit eines maximal zulässigen Fahrzeugaufpralls ist, bei dem eine Betätigung der Fahrzeuginsassenrückhalteeinrichtung nicht erwünscht ist.

6. System nach Anspruch 5, des weiteren umfassend eine erste Dämpfungseinrichtung (110), die mit der Einrichtung zum Ermitteln der Fahrzeuggeschwindigkeit verbunden ist, zum Dämpfen der empfangenen Beschleunigungsinformation, und eine zweite Dämpfungseinrichtung (116), die mit der Einrichtung zum Ermitteln der zunehmenden oder abnehmenden Verzögerung verbunden ist, zum Dämpfen des die zunehmende oder abnehmende Fahrzeugverzögerung angebenden Wertes.

7. System nach Anspruch 5, bei dem der die zunehmende oder abnehmende Verzögerung angebende Wert einen Stoßwert der Beschleunigungsinformation umfaßt.

## Revendications

1. Procédé de discrimination de collision de véhicule pour commander l'actionnement d'un dispositif de retenue de passager de véhicule comprenant les étapes consistant à :
recevoir (102) une information d'accélération du véhicule provenant d'au moins un capteur d'accélération;
déterminer (108) une valeur représentant la vitesse du véhicule en se basant sur ladite information d'accélération du véhicule reçue;
comparer (112) ladite valeur représentant la vitesse du véhicule avec une première valeur de seuil prédéterminée (TH1);
déterminer (114) une valeur représentant la décélération variable du véhicule en se basant sur ladite information d'accélération du véhicule reçue en fonction du temps;
comparer (118) ladite valeur représentant la décélération variable du véhicule avec une deuxième valeur de seuil prédéterminée, ladite deuxième valeur de seuil prédéterminée étant une valeur positive; et
actionner (120) ledit dispositif de retenue de passager de véhicule si ladite valeur représentant la vitesse du véhicule dépasse ladite première valeur de seuil prédéterminée et ladite valeur représentant la décélération variable du véhicule dépasse ladite deuxième valeur de seuil prédéterminée; caractérisé en ce que
la valeur représentant la décélération variable du véhicule est déterminée seulement si ladite valeur représentant la vitesse du véhicule dépasse ladite première valeur de seuil prédéterminée et indique si la décélération augmente ou diminue après que ladite valeur représentant la vitesse du véhicule a dépassé ladite première valeur de seuil prédéterminée, ladite première valeur de seuil prédéterminée étant égale à environ la moitié de la vitesse d'une collision de véhicule maximum admissible à laquelle l'actionnement dudit dispositif de retenue de passager de véhicule n'est pas désiré.

2. Procédé selon la revendication 1, dans lequel ladite information d'accélération est respectivement amortie (110, 116) avant de déterminer ladite valeur représentant la vitesse du véhicule et ladite valeur représentant l'augmentation ou la diminution de la décélération du véhicule.

3. Procédé selon la revendication 1, dans lequel ladite valeur représentant l'augmentation ou la diminution de la décélération du véhicule comprend une valeur de saut de l'information d'accélération.

4. Procédé selon l'une quelconque des revendications 1, 2 ou 3, pour discriminer des collisions de véhicule à faible vitesse et de longue durée dans lesquelles l'actionnement d'un dispositif de retenue de passager de véhicule est désiré, de collisions de véhicule à faible vitesse dans lesquelles l'actionnement dudit dispositif de retenue de passager de véhicule n'est pas désiré.

5. Système de discrimination de collision de véhicule pour commander l'actionnement d'un dispositif de retenue de passager de véhicule comprenant :
des moyens (102) pour recevoir une information d'accélération de véhicule provenant d'un capteur d'accélération;
des moyens (108) pour déterminer une valeur représentant la vitesse du véhicule en se basant sur ladite information d'accélération de véhicule reçue;
un premier moyen de comparaison (112) pour comparer ladite valeur représentant la vitesse du véhicule avec une première valeur de seuil prédéterminée;
des moyens (114) connectés auxdits moyens de réception pour déterminer une valeur représentant la décélération variable du véhicule en se basant sur ladite information d'accélération du véhicule reçue en fonction du temps;
un deuxième moyen de comparaison (118) pour comparer ladite valeur représentant la décélération variable du véhicule avec une deuxième valeur de seuil prédéterminée, ladite deuxième valeur de seuil prédéterminée étant une valeur positive; et
des moyens (120) connectés audit deuxième moyen de comparaison pour actionner ledit dispositif de retenue de passager de véhicule si ladite valeur représentant la vitesse du véhicule dépasse ladite première valeur de seuil prédéterminée et ladite valeur représentant la décélération variable du véhicule dépasse ladite deuxième valeur de seuil prédéterminée; caractérisé en ce que
la valeur représentant la décélération variable du véhicule est déterminée seulement si ladite valeur représentant la vitesse du véhicule dépasse ladite première valeur de seuil prédéterminée et indique si la décélération augmente ou diminue après que ladite valeur représentant la vitesse du véhicule a dépassé ladite première valeur de seuil prédéterminée, ladite première valeur de seuil prédéterminée étant égale à environ la moitié de la vitesse d'une collision de véhicule maximum admissible à laquelle l'actionnement dudit dispositif de retenue de passager de véhicule n'est pas désiré.

6. Système selon la revendication 5, comprenant en outre un premier moyen d'amortissement (110) connecté auxdits moyens de détermination de vitesse de véhicule pour amortir ladite information d'accélération reçue, et un deuxième moyen d'amortissement (116) connecté auxdits moyens de détermination d'augmentation ou de diminution de la décélération pour amortir ladite valeur représentant l'augmentation ou la diminution de la décélération du véhicule.

7. Système selon la revendication 5, dans lequel ladite valeur représentant l'augmentation ou la diminution de la décélération du véhicule comprend une valeur de saut de l'information d'accélération.
